# EUROPÄISCHE PATENTSCHRIFT

(11) **EP 4 014 710 B1**
(45) Veröffentlichungstag und Bekanntmachung des Hinweises auf die Patenterteilung: **28.06.2023**
(21) Anmeldenummer: 20215166.8
(22) Anmeldetag: 17.12.2020
(51) Int. Cl.: A01D 34/74, A01D 34/82, A01D 34/00, A01D 75/20

(54) **AUTONOMER MOBILER GRÜNFLÄCHENBEARBEITUNGSROBOTER**
AUTONOMOUS MOBILE GREEN AREA PROCESSING ROBOT
ROBOT AUTONOME ET MOBILE DE TRAITEMENT DES ESPACES VERTS

(43) Veröffentlichungstag der Anmeldung: 22.06.2022
(73) Patentinhaber: Andreas Stihl AG & Co. KG, 71336 Waiblingen (DE)
(72) Erfinder: BAUMANN, Simon, 83024 Rosenheim (DE); GASSNER, Markus, 6345 Kössen (AT); GOTTINGER, Clemens, 6330 Kufstein (AT); DUREGGER, Georg, 6342 Niederndorf (AT)
(74) Vertreter: Patentanwälte Ruff, Wilhelm, Beier, Dauster & Partner mbB

(56) Entgegenhaltungen:
- EP-A1- 3 047 719
- US-A- 4 224 785
- US-A1- 2016 353 657
- US-A1- 2019 307 060

## Beschreibung

Die Erfindung bezieht sich auf einen autonomen mobilen Grünflächenbearbeitungsroboter. Ein gattungsähnlicher Grünflächenbearbeitungsroboter ist aus US 2019/307060 A1 bekannt.

### AUFGABE UND LÖSUNG

Der Erfindung liegt als Aufgabe die Bereitstellung eines autonomen mobilen Grünflächenbearbeitungsroboters zugrunde, der verbesserte Eigenschaften aufweist.

Die Erfindung löst diese Aufgabe durch die Bereitstellung eines autonomen mobilen Grünflächenbearbeitungsroboters mit den Merkmalen des Anspruchs 1. Vorteilhafte Weiterbildungen und/oder Ausgestaltungen der Erfindung sind in den abhängigen Ansprüchen beschrieben.

Der erfindungsgemäße, insbesondere elektrische, autonome mobile Grünflächenbearbeitungsroboter umfasst bzw. weist ein, insbesondere mechanisches, Bearbeitungswerkzeug, eine, insbesondere mechanische, Schutzeinrichtung und eine, insbesondere mechanische, Höhenverstelleinrichtung auf. Eine Werkzeughöhe, insbesondere ein Wert der Werkzeughöhe, des Bearbeitungswerkzeugs ist verstellbar. Die Schutzeinrichtung ist zum, insbesondere mechanischen, Schutz vor einem Eingriff, insbesondere durch einen Menschen oder ein Tier, in das Bearbeitungswerkzeug ausgebildet bzw. konfiguriert. Eine Schutzhöhe, insbesondere ein Wert der Schutzhöhe, der Schutzeinrichtung ist verstellbar. Die Höhenverstelleinrichtung ist zur gekoppelten, insbesondere gleichzeitigen, Verstellung der Werkzeughöhe und der Schutzhöhe miteinander derart ausgebildet bzw. konfiguriert, dass ein, insbesondere räumlicher, Werkzeughöhenverstellwert der Verstellung der Werkzeughöhe und ein, insbesondere räumlicher, Schutzhöhenverstellwert der Verstellung der Schutzhöhe, insbesondere über mindestens einen Abschnitt eines jeweiligen, insbesondere räumlichen, Verstellbereichs der Verstellung der Werkzeughöhe und der Schutzhöhe, verschieden, insbesondere groß, sind. Zusätzlich ist die Höhenverstelleinrichtung zu der gekoppelten Verstellung der Werkzeughöhe und der Schutzhöhe miteinander derart ausgebildet bzw. konfiguriert, dass ein Abstand, insbesondere ein Wert des Abstands, bzw. eine Entfernung bzw. eine Distanz zwischen dem Bearbeitungswerkzeug und der Schutzeinrichtung verändert ist bzw. sich verändert.

Die Verstellung der Werkzeughöhe des Bearbeitungswerkzeugs ermöglicht eine gewünschte Bearbeitung einer, insbesondere zu bearbeitenden, Fläche, insbesondere eine gewünschte Pflanzenhöhe einer Bepflanzung der Fläche.

Die Verstellung der Schutzhöhe der Schutzeinrichtung ermöglicht eine Anpassung der Schutzeinrichtung und/oder einen angepassten Schutz durch die Schutzeinrichtung an das Bearbeitungswerkzeug, insbesondere die Werkzeughöhe.

Die gekoppelte Verstellung der Werkzeughöhe und der Schutzhöhe miteinander ermöglicht, dass der Grünflächenbearbeitungsroboter nutzerfreundlich und/oder relativ sicher sein kann, insbesondere im Unterschied zu einem nicht-erfindungsgemäßen Grünflächenbearbeitungsroboter mit keiner gekoppelten Verstellung einer Werkzeughöhe und einer Schutzhöhe miteinander.

Dass der Werkzeughöhenverstellwert der Verstellung der Werkzeughöhe und der Schutzhöhenverstellwert der Verstellung der Schutzhöhe verschieden sind, bzw. die verschiedene Höhenverstellung ermöglicht eine optimierte Anpassung der Schutzeinrichtung an das Bearbeitungswerkzeug und einen optimierten Schutz durch die Schutzeinrichtung, insbesondere im Unterschied zu einer nicht-erfindungsgemäßen Verstellung derart, dass ein Werkzeughöhenverstellwert und ein Schutzhöhenverstellwert nicht verschieden bzw. gleich sind. Insbesondere kann eine gleiche Verstellung bei einer niedrigen bzw. kleinen bzw. tiefen Stellung der Werkzeughöhe eine zu niedrige bzw. zu kleine bzw. zu tiefe Stellung der Schutzhöhe verursachen und somit eine Bearbeitung mittels des Bearbeitungswerkzeugs negativ beeinflussen und/oder eine gleiche Verstellung kann bei einer großen bzw. hohen Stellung der Werkzeughöhe eine zu große bzw. zu hohe Stellung der Schutzhöhe verursachen und somit einen Schutz durch die Schutzeinrichtung negativ beeinflussen.

Die Veränderung des Abstands zwischen dem Bearbeitungswerkzeug und der Schutzeinrichtung ermöglicht eine Einfachheit und somit eine Kostengünstigkeit eines Aufbaus bzw. einer Konstruktion des Grünflächenbearbeitungsroboters.

Insbesondere kann autonomer mobiler Grünflächenbearbeitungsroboter bedeuten, dass der Grünflächenbearbeitungsroboter dazu ausgebildet sein kann, sich selbstständig, selbsttätig, selbstbestimmt, selbstgesteuert, selbstgeführt und/oder unabhängig von einem Nutzer, insbesondere auf der Fläche, die vorgegeben und/oder begrenzt sein kann, zu bewegen und/oder selbstständig, selbsttätig, selbstbestimmt, selbstgesteuert, selbstgeführt und/oder unabhängig von einem Nutzer, insbesondere die Fläche, zu bearbeiten, insbesondere das Bearbeiten bzw. die Bearbeitung anzufangen und/oder zu beenden, insbesondere mittels des Bearbeitungswerkzeugs. Zusätzlich oder alternativ kann der Grünflächenbearbeitungsroboter ein Gartengerät sein.

Die Fläche kann beispielsweise eine Freifläche, insbesondere ein unversiegelter Boden, oder eine Grünfläche sein, wie eine Wiese mit Rasen.

Das Bearbeitungswerkzeug kann zur Bearbeitung der Fläche, insbesondere der Bepflanzung, ausgebildet sein. Zusätzlich oder alternativ kann das Bearbeitungswerkzeug ein Schneidwerkzeug aufweisen, insbesondere sein. Insbesondere kann die Werkzeughöhe eine Schnitthöhe des Schneidwerkzeugs sein.

Der Grünflächenbearbeitungsroboter kann einen Werkzeugantriebsmotor zum Antrieb des Bearbeitungswerkzeugs aufweisen. Insbesondere kann eine Motorhöhe des Werkzeugantriebsmotors, insbesondere fest gekoppelt mit der Werkzeughöhe des Bearbeitungswerkzeugs, verstellbar sein.

Die Werkzeughöhe kann in einem Verstellbereich zwischen 0 cm (Zentimeter), insbesondere 2 cm, bis 20 cm, insbesondere 15 cm, insbesondere 10 cm, und/oder in mindestens drei Stufen oder stufenlos verstellbar sein. Zusätzlich oder alternativ kann die Werkzeughöhe eine Höhe einer Unterkante des Bearbeitungswerkzeugs sein.

Die Schutzhöhe kann in einem Verstellbereich zwischen 1 cm (Zentimeter), insbesondere 3 cm, bis 14 cm, insbesondere 9 cm, und/oder in mindestens drei Stufen oder stufenlos verstellbar sein. Zusätzlich oder alternativ kann die Schutzhöhe eine Höhe einer Unterkante der Schutzeinrichtung sein.

Der Werkzeughöhenverstellwert und der Schutzhöhenverstellwert können mindestens 1 cm, insbesondere mindestens 2 cm, insbesondere mindestens 5 cm, und/oder mindestens 10 % (Prozent), insbesondere mindestens 20 %, insbesondere mindestens 50 %, verschieden sein. Zusätzlich oder alternativ brauchen oder können der Werkzeughöhenverstellwert und der Schutzhöhenverstellwert nicht gleich, insbesondere nicht proportional zueinander, sein.

Der Abstand kann zwischen einem Ende, insbesondere der Unterkante, des Bearbeitungswerkzeugs und einem nächsten Ende, insbesondere der Unterkante, der Schutzeinrichtung sein. Zusätzlich oder alternativ kann der Abstand die Länge der kürzesten Verbindung zwischen dem Bearbeitungswerkzeug, insbesondere seinem Ende und/oder seiner Unterkante, und der Schutzeinrichtung, insbesondere ihrem Ende und/oder ihrer Unterkante, sein.

Die, insbesondere jeweilige, Unterkante kann einer Fahrebene des Grünflächenbearbeitungsroboters am nächsten sein.

In einer Weiterbildung der Erfindung definiert bzw. weist der Grünflächenbearbeitungsroboter eine, insbesondere horizontale, Fahrebene auf. Die Werkzeughöhe und die Schutzhöhe sind, insbesondere in einer Richtung orthogonal zu der Fahrebene, insbesondere vertikal, über der Fahrebene. Insbesondere kann der Grünflächenbearbeitungsroboter Laufräder zum Bewegen bzw. zur Bewegung des Grünflächenbearbeitungsroboters, insbesondere auf der Fläche, aufweisen, wobei die Laufräder die Fahrebene definieren können.

In einer Weiterbildung der Erfindung ist die Höhenverstelleinrichtung derart ausgebildet bzw. konfiguriert, dass der Werkzeughöhenverstellwert größer als der Schutzhöhenverstellwert ist. Dies ermöglicht eine besonders optimierte Anpassung der Schutzeinrichtung an das Bearbeitungswerkzeug und einen besonders optimierten Schutz durch die Schutzeinrichtung.

In einer Weiterbildung der Erfindung ist die Schutzeinrichtung, insbesondere in einer, insbesondere horizontalen, Richtung von einer Front zu einem Heck des Grünflächenbearbeitungsroboters, vor dem Bearbeitungswerkzeug angeordnet. Dies ermöglicht bei einem, insbesondere hauptsächlichen, Vorwärtsbewegen bzw. einer, insbesondere hauptsächlichen, Vorwärtsbewegung des Grünflächenbearbeitungsroboters einen Schutz durch die Schutzeinrichtung vor einem Eingriff in das Bearbeitungswerkzeug. Insbesondere kann der Grünflächenbearbeitungsroboter Antriebsräder zum Antreiben bzw. zum Antrieb des Grünflächenbearbeitungsroboters, insbesondere auf der Fläche, aufweisen, wobei die Antriebsräder dem Heck näher als der Front, insbesondere im Bereich des Hecks, insbesondere an dem Heck, angeordnet sein können.

In einer Weiterbildung der Erfindung definiert bzw. weist der Grünflächenbearbeitungsroboter eine, insbesondere die und/oder horizontale, Fahrebene auf. Das Bearbeitungswerkzeug ist zur Bewegung, insbesondere zur Rotation bzw. Drehung, etwa, insbesondere genau, parallel zu der Fahrebene ausgebildet bzw. konfiguriert. Dies kann eine Bearbeitung der Fläche, insbesondere der Bepflanzung, im sogenannten Freischnittverfahren ohne Gegenschneide ermöglichen. Insbesondere kann der Grünflächenbearbeitungsroboter Laufräder zum Bewegen bzw. zur Bewegung des Grünflächenbearbeitungsroboters, insbesondere auf der Fläche, aufweisen, wobei die Laufräder die Fahrebene definieren können. Zusätzlich oder alternativ kann eine Rotationsachse des Bearbeitungswerkzeugs etwa orthogonal zu der Fahrebene sein. Weiter zusätzlich oder alternativ kann etwa parallel eine Abweichung, insbesondere eine Winkelabweichung, von maximal 10 ° (Grad), insbesondere von maximal 5 °, insbesondere von maximal 3 °, bedeuten und/oder etwa orthogonal kann eine Abweichung, insbesondere eine Winkelabweichung, von minimal 80 °, insbesondere von minimal 85 °, insbesondere von minimal 87 °, bedeuten. Weiter zusätzlich oder alternativ kann der Abstand ein Abstand zwischen dem Bearbeitungswerkzeug in einer nächsten und/oder vordersten Bewegungsstellung, insbesondere Rotationsstellung, und der Schutzeinrichtung sein.

In einer Weiterbildung der Erfindung umfasst bzw. weist das Bearbeitungswerkzeug ein Rasenmähwerkzeug auf, insbesondere ist das Rasenmähwerkzeug. Die Werkzeughöhe ist eine Mähhöhe des Rasenmähwerkzeugs. Die gekoppelte Verstellung der Werkzeughöhe in Form der Mähhöhe und der Schutzhöhe miteinander mit dem Werkzeughöhenverstellwert und dem Schutzhöhenverstellwert verschieden ermöglicht ein optimiertes Mähen der Bepflanzung, insbesondere von Gras, insbesondere von Südstaatengräsern der Vereinigten Staaten von Amerika, wie z.B. St. Augustine mit seitlichen Ausläufern. Insbesondere kann bei einer großen bzw. hohen Mähhöhe ein einfaches Zuführen bzw. Einlaufen der Bepflanzung zu dem Rasenmähwerkzeug und/oder bei einer niedrigen bzw. kleinen bzw. tiefen Mähhöhe eine ausreichende Bodenfreiheit, insbesondere zu Stolonen, ermöglicht sein, insbesondere und somit ein Niederdrücken vermieden werden. Zusätzlich oder alternativ kann die Pflanzenhöhe eine Rasenhöhe sein. Weiter zusätzlich oder alternativ kann der Grünflächenbearbeitungsroboter ein Rasenmähroboter, insbesondere ein Mulchmähroboter, sein. Weiter zusätzlich oder alternativ kann das Rasenmähwerkzeug zum Mähen der Fläche, insbesondere der Bepflanzung, insbesondere von Gras, ausgebildet sein. Weiter zusätzlich oder alternativ kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn aufweisen bzw. umfassen.

In einer Weiterbildung der Erfindung umfasst bzw. weist die Schutzeinrichtung einen, insbesondere nach unten, insbesondere in Richtung der Fahrebene, insbesondere vertikal, ausgerichteten und/oder nach unten, insbesondere in Richtung der Fahrebene, offenen, Kamm auf. Die Schutzhöhe ist eine Kammhöhe, insbesondere einer Unterkante, des Kamms. Dies ermöglicht einen guten Schutz vor einem Eingriff, insbesondere durch einen Menschen oder ein Tier, in das Bearbeitungswerkzeug und/oder ein gutes Zuführen bzw. Einlaufen der Bepflanzung zu dem Bearbeitungswerkzeug und/oder ein Aufrichten der Bepflanzung und somit ein gutes Bearbeiten bzw. eine gute Bearbeitung der Bepflanzung. Insbesondere kann der Kamm ein Eingriffsschutz- und/oder Mitnehmer- und/oder Rasen- bzw. Gras-Kamm sein. Zusätzlich oder alternativ kann der Kamm, insbesondere zueinander parallele, Zinken bzw. Rippen aufweisen, insbesondere wobei die Zinken nach unten ausgerichtet sein können. Insbesondere kann die Kammhöhe eine Zinkenhöhe, insbesondere unterer Zinkenenden, der Zinken sein und/oder die Unterkante des Kamms kann durch, insbesondere untere, Zinkenenden der Zinken definiert sein. Weiter zusätzlich oder alternativ kann der Abstand ein Abstand zwischen dem Bearbeitungswerkzeug und dem Kamm, insbesondere seiner Unterkante, sein. Weiter zusätzlich oder alternativ kann der Kamm in etwa, insbesondere genau, von rechts, insbesondere einer rechten Seite, nach links, insbesondere zu einer linken Seite, des Grünflächenbearbeitungsroboters bzw. orthogonal zu der Richtung von der Front zu dem Heck des Grünflächenbearbeitungsroboters ausgerichtet sein.

In einer Weiterbildung der Erfindung umfasst bzw. weist die Höhenverstelleinrichtung eine Höhenverstellkopplungsmechanik auf. Die Höhenverstellkopplungsmechanik ist zur, insbesondere unmittelbaren, mechanischen Kopplung des Bearbeitungswerkzeugs und der Schutzeinrichtung, insbesondere miteinander, zu der gekoppelten Verstellung der Werkzeughöhe und der Schutzhöhe miteinander ausgebildet bzw. konfiguriert. Dies ermöglicht, dass der Grünflächenbearbeitungsroboter besonders sicher und/oder einfach und somit kostengünstig aufgebaut bzw. konstruiert sein kann.

In einer Ausgestaltung der Erfindung umfasst bzw. weist die Höhenverstellkopplungsmechanik, insbesondere mindestens, einen, insbesondere einseitigen oder zweiseitigen, Hebel zu der gekoppelten Verstellung der Werkzeughöhe und der Schutzhöhe miteinander auf. Der Grünflächenbearbeitungsroboter umfasst bzw. weist eine Bearbeitungswerkzeugeinrichtung auf. Die Bearbeitungswerkzeugeinrichtung umfasst bzw. weist das Bearbeitungswerkzeug auf. Die Bearbeitungswerkzeugeinrichtung ist mit dem, insbesondere mindestens einen, Hebel mit einem Werkzeugabstandswert von einer Drehachse des Hebels, insbesondere unmittelbar, mechanisch gekoppelt. Die Schutzeinrichtung ist mit dem, insbesondere mindestens einen, Hebel mit einem Schutzabstandswert von der Drehachse, insbesondere unmittelbar, mechanisch gekoppelt. Der Werkzeugabstandswert und der Schutzabstandswert sind verschieden. Dies ermöglicht eine einfache mechanische Kopplung bzw. Übertragung. Insbesondere kann die Drehachse etwa, insbesondere genau, parallel zu der, insbesondere horizontalen, Fahrebene, insbesondere angeordnet bzw. ausgerichtet, sein. Zusätzlich oder alternativ kann die Drehachse in etwa, insbesondere genau, von rechts, insbesondere einer rechten Seite, nach links, insbesondere zu einer linken Seite, des Grünflächenbearbeitungsroboters bzw. orthogonal zu der Richtung von der Front zu dem Heck des Grünflächenbearbeitungsroboters, insbesondere angeordnet bzw. ausgerichtet, sein. Weiter zusätzlich oder alternativ kann der Werkzeugabstandswert größer als der Schutzabstandswert sein.

In einer Ausgestaltung der Erfindung umfasst bzw. weist der Grünflächenbearbeitungsroboter eine, insbesondere die, Bearbeitungswerkzeugeinrichtung auf. Die Bearbeitungswerkzeugeinrichtung umfasst bzw. weist das Bearbeitungswerkzeug auf. Die Höhenverstellkopplungsmechanik umfasst bzw. weist, insbesondere mindestens, eine Werkzeugführungskulisse und, insbesondere mindestens, eine Schutzführungskulisse zu der gekoppelten Verstellung der Werkzeughöhe und der Schutzhöhe miteinander auf. Die, insbesondere mindestens eine, Werkzeugführungskulisse und die, insbesondere mindestens eine, Schutzführungskulisse sind zur gekoppelten, insbesondere parallelen und/oder unmittelbaren, Verstellung, insbesondere Verschiebung, insbesondere mit einem gleichen Führungskulissenverstellwert, miteinander entlang bzw. in mindestens einer, insbesondere selben, zu der Verstellung der Werkzeughöhe und der Schutzhöhe nicht-parallelen, insbesondere orthogonalen, Führungsrichtung in Bezug auf die Bearbeitungswerkzeugeinrichtung und die Schutzeinrichtung ausgebildet bzw. konfiguriert. Die, insbesondere mindestens eine, Werkzeugführungskulisse ist zur, insbesondere unmittelbaren und/oder mechanischen, Führung, insbesondere der Verstellung, der und/oder durch die, insbesondere der Verstellung der, Bearbeitungswerkzeugeinrichtung ausgebildet bzw. konfiguriert und hat bzw. weist, insbesondere mindestens, einen Werkzeugführungsverlauf mit mindestens einem Abschnitt schräg zu der Verstellung der Werkzeughöhe und der Führungsrichtung auf. Die, insbesondere mindestens eine, Schutzführungskulisse ist zur, insbesondere unmittelbaren und/oder mechanischen, Führung, insbesondere der Verstellung, der und/oder durch die, insbesondere der Verstellung der, Schutzeinrichtung ausgebildet bzw. konfiguriert und hat bzw. weist, insbesondere mindestens, einen Schutzführungsverlauf mit mindestens einem Abschnitt schräg zu der Verstellung der Schutzhöhe und der Führungsrichtung auf. Der, insbesondere mindestens eine, Werkzeugführungsverlauf und der, insbesondere mindestens eine, Schutzführungsverlauf sind, insbesondere über mindestens einen, insbesondere den, Abschnitt eines jeweiligen Verlaufsbereichs, verschieden, insbesondere groß bzw. hoch bzw. lang. Dies ermöglicht eine komplexe mechanische Kopplung bzw. Übertragung. Insbesondere kann die Führungsrichtung etwa, insbesondere genau, parallel zu der, insbesondere horizontalen, Fahrebene, insbesondere angeordnet sein. Zusätzlich oder alternativ kann die Führungsrichtung etwa, insbesondere genau, parallel zu der, insbesondere horizontalen, Richtung von der Front zu dem Heck des Grünflächenbearbeitungsroboters, insbesondere angeordnet, sein. Weiter zusätzlich oder alternativ können/kann die Werkzeugführungskulisse und/oder die Schutzführungskulisse, insbesondere jeweils, einen Schlitz, einen Steg oder eine Nut aufweisen.

In einer Ausgestaltung der Erfindung sind die Werkzeugführungskulisse und die Schutzführungskulisse fest zueinander angeordnet. Insbesondere umfasst bzw. weist die Höhenverstellkopplungsmechanik, insbesondere mindestens, eine Platte auf. Die Platte hat bzw. weist die Werkzeugführungskulisse und die Schutzführungskulisse auf. Zusätzlich oder alternativ sind der Werkzeugführungsverlauf und der Schutzführungsverlauf in einer selben Verlaufsebene, insbesondere angeordnet. Insbesondere kann die Verlaufsebene eine Plattenebene der Platte sein.

In einer Weiterbildung der Erfindung umfasst bzw. weist die Höhenverstellkopplungsmechanik, insbesondere mindestens, einen Mitnehmer zu der gekoppelten Verstellung der Werkzeughöhe und der Schutzhöhe miteinander und, insbesondere mindestens, einen Verstellungsbegrenzer, insbesondere einen Mitnehmungsbegrenzer, auf. Der, insbesondere mindestens eine, Mitnehmer ist dazu ausgebildet bzw. konfiguriert, bei der Verstellung der Werkzeughöhe des Bearbeitungswerkzeugs die Schutzeinrichtung zu der Verstellung der Schutzhöhe, insbesondere unmittelbar und/oder mechanisch, mitzunehmen. Der, insbesondere mindestens eine, Verstellungsbegrenzer ist dazu ausgebildet bzw. konfiguriert, die Verstellung der Schutzhöhe, insbesondere die Mitnahme, auf, insbesondere nur, einen, insbesondere den, Abschnitt eines, insbesondere des, Verstellbereichs der Verstellung der Werkzeughöhe , insbesondere unmittelbar und/oder mechanisch, zu begrenzen. Alternativ ist der, insbesondere mindestens eine, Mitnehmer dazu ausgebildet bzw. konfiguriert, bei der Verstellung der Schutzhöhe der Schutzeinrichtung das Bearbeitungswerkzeug zu der Verstellung der Werkzeughöhe, insbesondere unmittelbar und/oder mechanisch, mitzunehmen. Der, insbesondere mindestens eine, Verstellungsbegrenzer ist dazu ausgebildet bzw. konfiguriert, die Verstellung der Werkzeughöhe, insbesondere die Mitnahme, auf, insbesondere nur, einen, insbesondere den, Abschnitt eines, insbesondere des, Verstellbereichs der Verstellung der Schutzhöhe , insbesondere unmittelbar und/oder mechanisch, zu begrenzen. Dies ermöglicht eine einfache mechanische Kopplung bzw. Übertragung.

In einer Weiterbildung der Erfindung definiert bzw. weist der Grünflächenbearbeitungsroboter eine, insbesondere die und/oder horizontale, Fahrebene auf. Das Bearbeitungswerkzeug und die Schutzeinrichtung sind etwa, insbesondere genau, parallel zu der Fahrebene zueinander fest gelagert bzw. angeordnet. Dies ermöglicht eine Einfachheit und somit eine Kostengünstigkeit eines Aufbaus bzw. einer Konstruktion des Grünflächenbearbeitungsroboters und/oder die Veränderung des Abstands zwischen dem Bearbeitungswerkzeug und der Schutzeinrichtung, insbesondere dadurch, dass der Werkzeughöhenverstellwert und der Schutzhöhenverstellwert verschieden sind. Insbesondere kann der Grünflächenbearbeitungsroboter Laufräder zum Bewegen bzw. zur Bewegung des Grünflächenbearbeitungsroboters, insbesondere auf der Fläche, aufweisen, wobei die Laufräder die Fahrebene definieren können. Zusätzlich oder alternativ kann etwa parallel eine Abweichung, insbesondere eine Winkelabweichung, von maximal 10 °, insbesondere von maximal 5 °, insbesondere von maximal 3 °, bedeuten.

In einer Weiterbildung der Erfindung umfasst bzw. weist die Höhenverstelleinrichtung ein nutzerbetätigbares Bedienelement zu der gekoppelten Verstellung der Werkzeughöhe und der Schutzhöhe miteinander auf. Zusätzlich oder alternativ umfasst bzw. weist die Höhenverstelleinrichtung mindestens, insbesondere nur, einen, insbesondere einzigen und/oder elektrischen, Motor zu der gekoppelten Verstellung der Werkzeughöhe und der Schutzhöhe miteinander auf. Insbesondere kann das Bedienelement oder der Motor zur mechanischen Kopplung mit dem Bearbeitungswerkzeug, insbesondere der Bearbeitungswerkzeugeinrichtung, der Schutzeinrichtung und/oder der Höhenverstellkopplungsmechanik ausgebildet, insbesondere mechanisch gekoppelt, sein. Zusätzlich oder alternativ kann die Höhenverstelleinrichtung zwei Motoren zu der gekoppelten Verstellung der Werkzeughöhe und der Schutzhöhe miteinander und eine elektrische, insbesondere elektronische, Steuerungseinrichtung aufweisen. Insbesondere kann einer der Motoren zur mechanischen Kopplung mit dem Bearbeitungswerkzeug ausgebildet, insbesondere mechanisch gekoppelt, sein und ein anderer der Motoren kann zur mechanischen Kopplung mit der Schutzeinrichtung ausgebildet, insbesondere mechanisch gekoppelt, sein. Weiter zusätzlich oder alternativ kann die Steuerungseinrichtung zur, insbesondere elektrisch, gekoppelten, insbesondere gleichzeitigen, Steuerung der Motoren ausgebildet sein. Weiter zusätzlich oder alternativ kann die Höhenverstelleinrichtung eine, insbesondere elektrische, nutzerbetätigbare Eingabeeinrichtung zur Eingabe und/oder eine, insbesondere elektrische und/oder kabellose, Empfangseinrichtung zum Empfang der Werkzeughöhe und/oder der Schutzhöhe und/oder einer zu der Werkzeughöhe und/oder der Schutzhöhe korrespondierenden Größe aufweisen. Insbesondere kann der mindestens eine Motor zu der gekoppelten Verstellung der Werkzeughöhe und der Schutzhöhe miteinander in Abhängigkeit der Eingabe und/oder des Empfangs ausgebildet sein.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: eine Perspektivansicht eines erfindungsgemäßen autonomen mobilen Grünflächenbearbeitungsroboters aufweisend ein Bearbeitungswerkzeug, eine Schutzeinrichtung und eine Höhenverstelleinrichtung zur gekoppelten Verstellung einer Werkzeughöhe des Bearbeitungswerkzeugs und einer Schutzhöhe der Schutzeinrichtung,
- Fig. 2: eine schematische geschnittene Seitansicht des Grünflächenbearbeitungsroboters mit verschiedenen Werkzeughöhen und verschiedenen Schutzhöhen,
- Fig. 3: eine schematische Seitenansicht des Bearbeitungswerkzeugs, der Schutzeinrichtung und der Höhenverstelleinrichtung aufweisend einen Hebel zur gekoppelten Verstellung der Werkzeughöhe und der Schutzhöhe miteinander in einer niedrigen Stellung,
- Fig. 4: eine weitere schematische Seitenansicht des Bearbeitungswerkzeugs, der Schutzeinrichtung und der Höhenverstelleinrichtung der Fig. 3 in einer etwa mittigen Stellung,
- Fig. 5: eine nochmals weitere schematische Seitenansicht des Bearbeitungswerkzeugs, der Schutzeinrichtung und der Höhenverstelleinrichtung der Fig. 3 in einer großen Stellung,
- Fig. 6: eine schematische Draufsicht auf die Höhenverstelleinrichtung der Fig. 3,
- Fig. 7: eine schematische Seitenansicht des Bearbeitungswerkzeugs, der Schutzeinrichtung und der Höhenverstelleinrichtung aufweisend eine Werkzeugführungskulisse und eine Schutzführungskulisse zur gekoppelten Verstellung der Werkzeughöhe und der Schutzhöhe miteinander in einer niedrigen Stellung,
- Fig. 8: eine weitere schematische Seitenansicht des Bearbeitungswerkzeugs, der Schutzeinrichtung und der Höhenverstelleinrichtung der Fig. 7 in einer etwa mittigen Stellung,
- Fig. 9: eine nochmals weitere schematische Seitenansicht des Bearbeitungswerkzeugs, der Schutzeinrichtung und der Höhenverstelleinrichtung der Fig. 7 in einer großen Stellung,
- Fig. 10: eine schematische Draufsicht auf die Höhenverstelleinrichtung der Fig. 7, und
- Fig. 11: eine schematische Seitenansicht des Bearbeitungswerkzeugs, der Schutzeinrichtung und der Höhenverstelleinrichtung aufweisend einen Mitnehmer zur gekoppelten Verstellung der Werkzeughöhe und der Schutzhöhe miteinander.

### DETAILLIERTE BESCHREIBUNG DER AUSFÜHRUNGSBEISPIELE

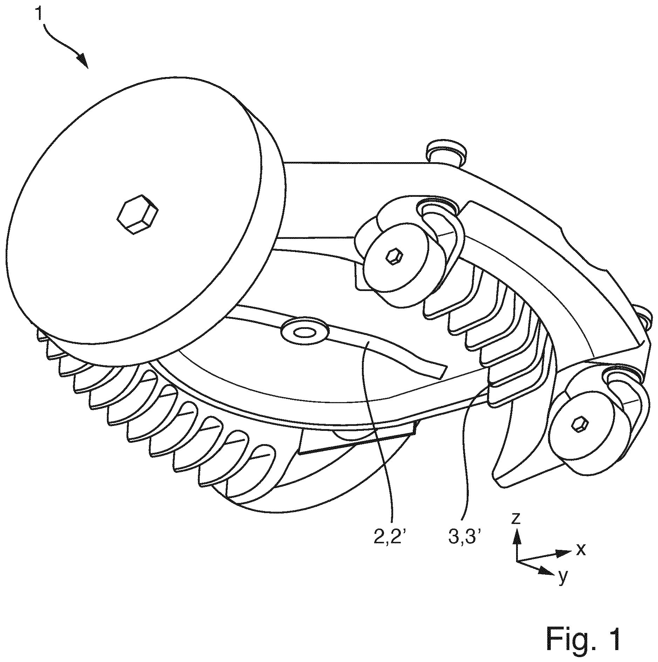

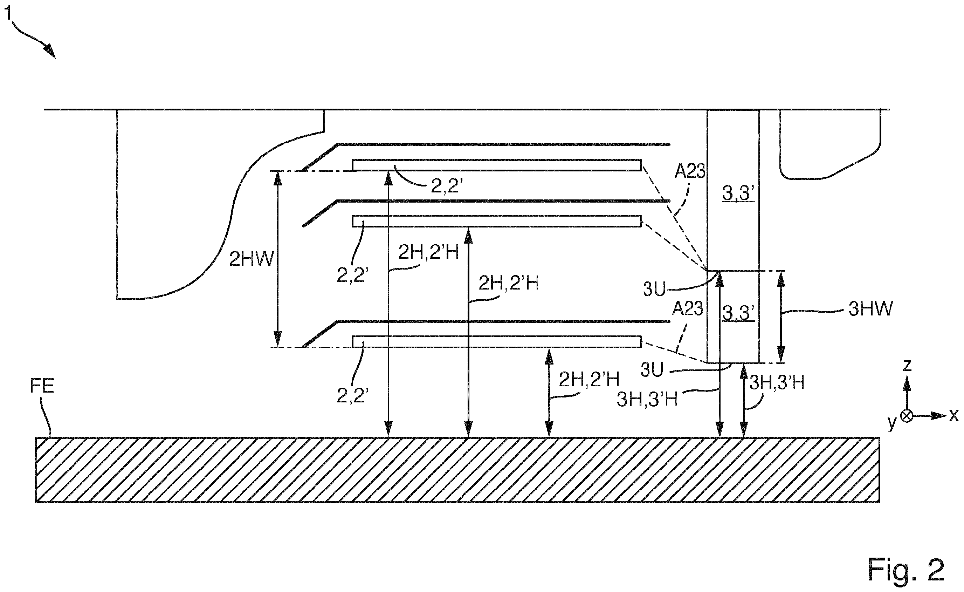

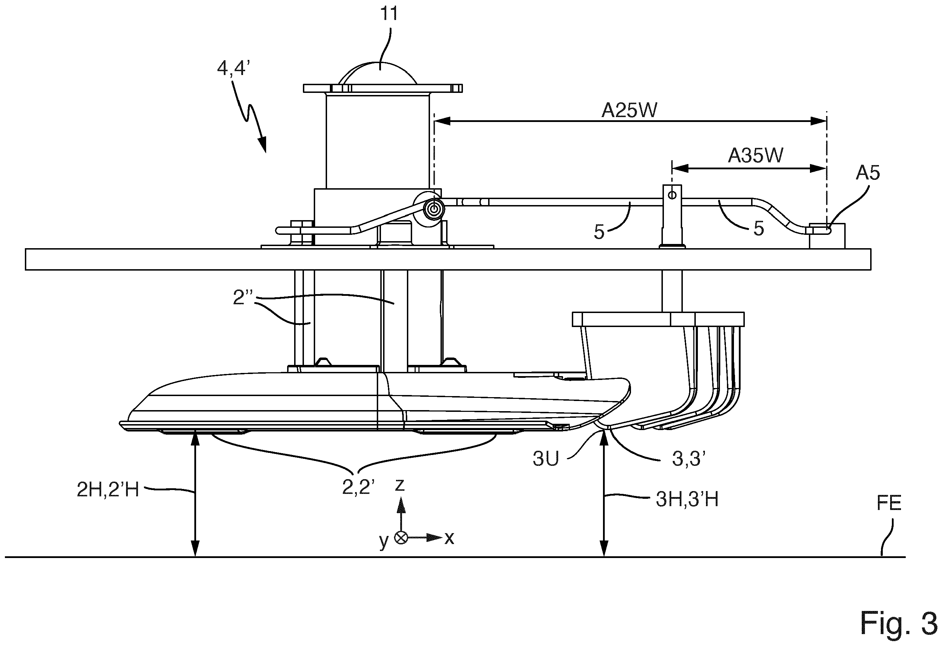

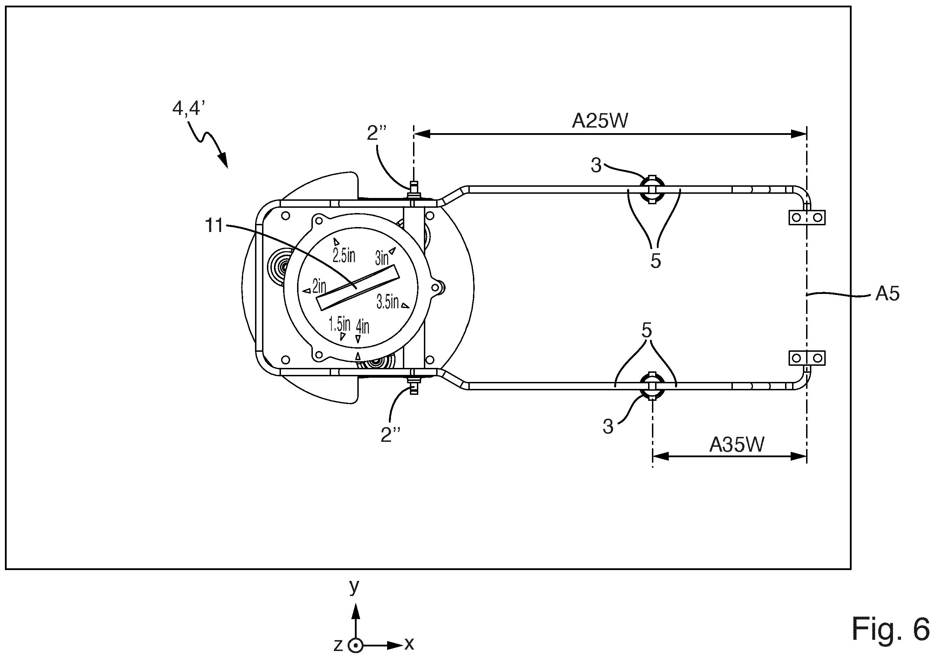

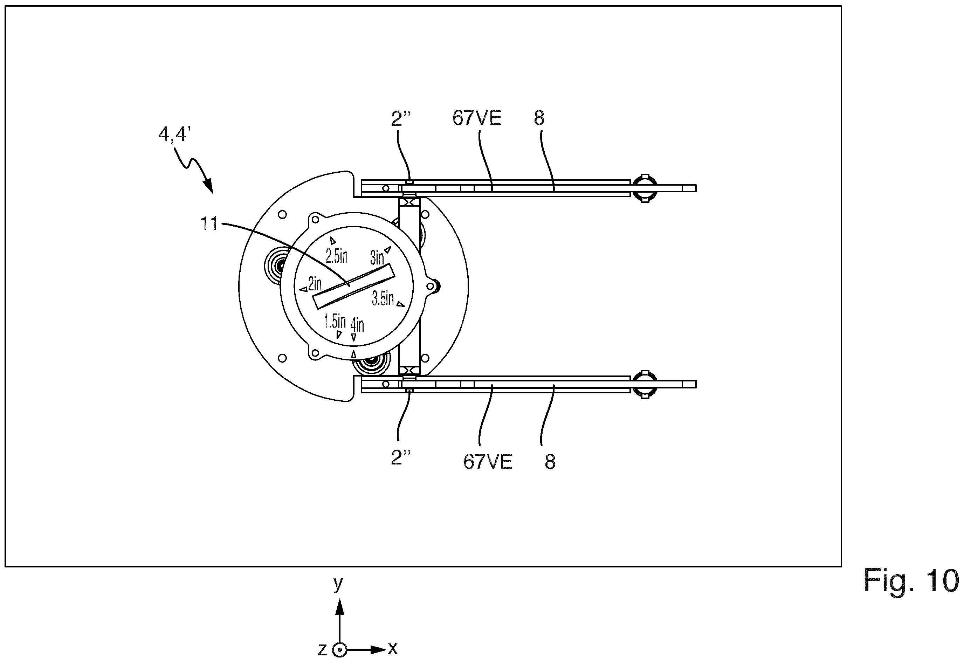

Fig. 1 und 2 zeigen einen erfindungsgemäßen autonomen mobilen Grünflächenbearbeitungsroboter 1. Der Grünflächenbearbeitungsroboter 1 weist ein Bearbeitungswerkzeug 2, eine Schutzeinrichtung 3 und eine Höhenverstelleinrichtung 4 auf, wie in Fig. 3 bis 6, 7 bis 10 und 11 gezeigt. Eine Werkzeughöhe 2H des Bearbeitungswerkzeugs 2 ist verstellbar, insbesondere ist verstellt. Die Schutzeinrichtung 3 ist zum Schutz vor einem Eingriff in das Bearbeitungswerkzeug 2 ausgebildet, insbesondere schützt. Eine Schutzhöhe 3H der Schutzeinrichtung 3 ist verstellbar, insbesondere ist verstellt. Die Höhenverstelleinrichtung 4 ist zur gekoppelten Verstellung der Werkzeughöhe 2H und der Schutzhöhe 3H miteinander derart ausgebildet, insbesondere verstellt gekoppelt derart, dass ein Werkzeughöhenverstellwert 2HW der Verstellung der Werkzeughöhe 2H und ein Schutzhöhenverstellwert 3HW der Verstellung der Schutzhöhe 3H verschieden sind, und dass ein Abstand A23 zwischen dem Bearbeitungswerkzeug 2 und der Schutzeinrichtung 3 verändert ist.

Im Detail weist der Grünflächenbearbeitungsroboter 1 eine, in den gezeigten Ausführungsbeispielen horizontale, Fahrebene FE auf.

Wie in Fig. 1 gezeigt, weist der Grünflächenbearbeitungsroboter 1, insbesondere vier, Laufräder zum Bewegen des Grünflächenbearbeitungsroboters 1 auf, wobei die Laufräder die Fahrebene FE definieren.

Des Weiteren sind die Werkzeughöhe 2H und die Schutzhöhe 3H, in den gezeigten Ausführungsbeispielen in einer Richtung z orthogonal zu der Fahrebene FE, insbesondere vertikal, über der Fahrebene FE.

Außerdem ist die Höhenverstelleinrichtung 4 derart ausgebildet, dass der Werkzeughöhenverstellwert 2HW größer als der Schutzhöhenverstellwert 3HW ist.

Weiter ist die Schutzeinrichtung 3, in den gezeigten Ausführungsbeispielen in einer, insbesondere horizontalen, Richtung -x von einer Front zu einem Heck des Grünflächenbearbeitungsroboters 1, vor dem Bearbeitungswerkzeug 2 angeordnet.

Wie in Fig. 1 gezeigt, weist der Grünflächenbearbeitungsroboter 1, insbesondere zwei, Antriebsräder, insbesondere der Laufräder, zum Antreiben des Grünflächenbearbeitungsroboters 1 auf, wobei die Antriebsräder dem Heck näher als der Front angeordnet sind.

Wie in Fig. 1 und 2 gezeigt, weist der Grünflächenbearbeitungsroboter 1 ein vorderes Volumen auf, wobei das vordere Volumen vor und rechts und links von der Schutzeinrichtung 3 und dem Bearbeitungswerkzeug 2 angeordnet ist, insbesondere und nicht höhenverstellbar ist. Zudem weist der Grünflächenbearbeitungsroboter 1 ein hinteres Volumen bzw. einen Diffusor bzw. eine Rampe bzw. eine weitere Schutzeinrichtung, insbesondere aufweisend einen hinteren Kamm, auf, wobei das hintere Volumen hinter und rechts und links von dem Bearbeitungswerkzeug 2 angeordnet ist, insbesondere und nicht höhenverstellbar ist. Des Weiteren sind die Laufräder vor und hinter und rechts und links von dem Bearbeitungswerkzeug 2 angeordnet. Insbesondere sind die Antriebsräder rechts und links von dem Bearbeitungswerkzeug 2 angeordnet.

Außerdem ist das Bearbeitungswerkzeug 2 zur Bewegung, in dem gezeigten Ausführungsbeispiel zur Rotation, etwa parallel zu der Fahrebene FE ausgebildet, insbesondere bewegt sich, insbesondere rotiert.

Weiter weist das Bearbeitungswerkzeug 2 ein Rasenmähwerkzeug 2' auf. Die Werkzeughöhe 2H ist eine Mähhöhe 2'H des Rasenmähwerkzeugs 2`.

Zudem weist die Schutzeinrichtung 3 einen, in den gezeigten Ausführungsbeispielen nach unten ausgerichteten und/oder nach unten offenen, Kamm 3' auf. Die Schutzhöhe 3H ist eine Kammhöhe 3'H, insbesondere einer Unterkante 3U, des Kamms 3`.

Des Weiteren sind das Bearbeitungswerkzeug 2 und die Schutzeinrichtung 3 etwa parallel zu der Fahrebene FE bzw. in der Richtung x zueinander fest gelagert.

In den gezeigten Ausführungsbeispielen weist der Grünflächenbearbeitungsroboter 1 ein Gestell, insbesondere ein Fahr- bzw. Untergestell, bzw. ein Chassis auf. Das Bearbeitungswerkzeug 2 und die Schutzeinrichtung 3 sind an dem Gestell angeordnet und durch das Gestell, insbesondere etwa parallel zu der Fahrebene FE bzw. in der Richtung x, zueinander fest gelagert. Insbesondere sind die Laufräder an dem Gestell angeordnet.

Außerdem weist die Höhenverstelleinrichtung 4 ein nutzerbetätigbares Bedienelement 11 zu der gekoppelten Verstellung der Werkzeughöhe 2H und der Schutzhöhe 3H miteinander auf.

In alternativen Ausführungsbeispielen kann die Höhenverstelleinrichtung zusätzlich oder alternativ mindestens einen Motor zu der gekoppelten Verstellung der Werkzeughöhe und der Schutzhöhe miteinander aufweisen.

In den gezeigten Ausführungsbeispielen ist das Bedienelement 11 zur mechanischen Kopplung mit dem Bearbeitungswerkzeug 2 und somit der Schutzeinrichtung 3 ausgebildet, insbesondere mechanisch gekoppelt.

Weiter weist die Höhenverstelleinrichtung 4 eine Höhenverstellkopplungsmechanik 4' auf. Die Höhenverstellkopplungsmechanik 4' ist zur mechanischen Kopplung des Bearbeitungswerkzeugs 2 und der Schutzeinrichtung 3 zu der gekoppelten Verstellung der Werkzeughöhe 2H und der Schutzhöhe 3H miteinander ausgebildet, insbesondere koppelt mechanisch und verstellt gekoppelt.

In den gezeigten Ausführungsbeispielen ist die Höhenverstellkopplungsmechanik 4' an dem Gestell angeordnet.

In dem in Fig. 3 bis 6 gezeigten Ausführungsbeispiel weist die Höhenverstellkopplungsmechanik 4' einen, insbesondere einseitigen, Hebel 5 zu der gekoppelten Verstellung der Werkzeughöhe 2H und der Schutzhöhe 3H miteinander auf. In alternativen Ausführungsbeispielen kann die Höhenverstellkopplungsmechanik einen zweiseitigen Hebel zu der gekoppelten Verstellung der Werkzeughöhe und der Schutzhöhe miteinander aufweisen. Der Grünflächenbearbeitungsroboter 1 weist eine Bearbeitungswerkzeugeinrichtung 2" auf. Die Bearbeitungswerkzeugeinrichtung 2" weist das Bearbeitungswerkzeug 2 auf. Die Bearbeitungswerkzeugeinrichtung 2" ist mit dem Hebel 5 mit einem Werkzeugabstandswert A25W von einer, in dem gezeigten Ausführungsbeispiel horizontalen und/oder zu der Fahrebene FE parallelen, Drehachse A5 des Hebels 5 mechanisch gekoppelt. Die Schutzeinrichtung 3 ist mit dem Hebel 5 mit einem Schutzabstandswert A35W von der Drehachse A5 mechanisch gekoppelt. Der Werkzeugabstandswert A25W und der Schutzabstandswert A35W sind verschieden.

In dem gezeigten Ausführungsbeispiel ist der Werkzeugabstandswert A25W größer als der Schutzabstandswert A35W.

Zudem ist der Hebel 5, insbesondere die Drehachse A5, an dem Gestell angeordnet, insbesondere und gelagert.

Des Weiteren ist die Bearbeitungswerkzeugeinrichtung 2" an dem Gestell angeordnet, insbesondere und gelagert.

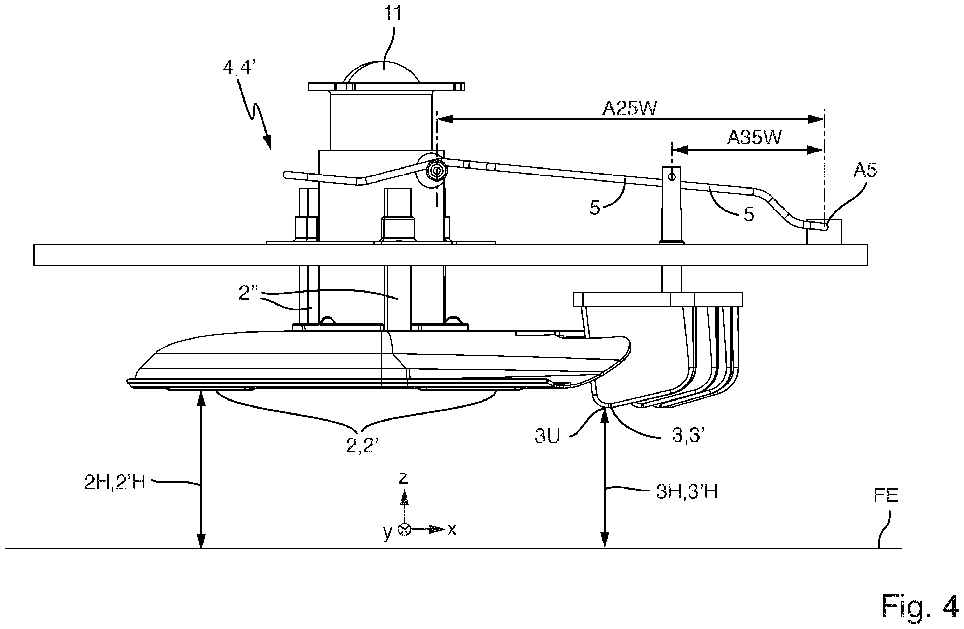

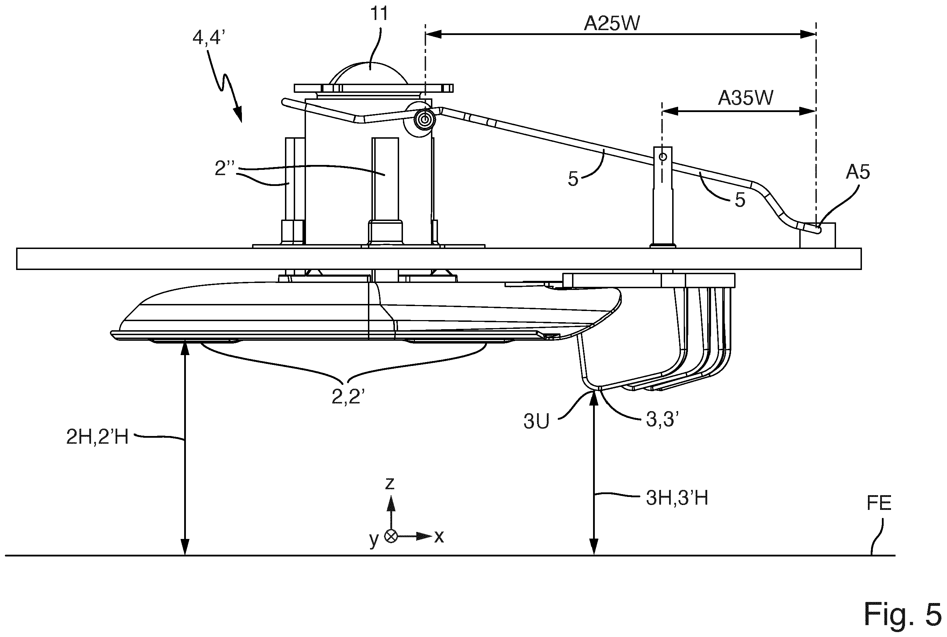

Im Detail verursacht eine Betätigung des Bedienelements 11 die Verstellung der Werkzeughöhe 2H, von in Fig. 3 niedrig, insbesondere 1.5 in (inch) gleich 2,5 cm, über in Fig. 4 etwa mittig, insbesondere 2,5 in gleich 6,4 cm, bis in Fig. 5 groß, insbesondere 4 in gleich 10,2 cm. Die Verstellung der Werkzeughöhe 2H verursacht eine Drehung des Hebels 5. Die Drehung des Hebels 5 verursacht die Verstellung der Schutzhöhe 3H, von in Fig. 3 niedrig, insbesondere 3,3 cm, über in Fig. 4 etwa mittig, insbesondere 4,7 cm, bis in Fig. 5 groß, insbesondere 6,0 cm.

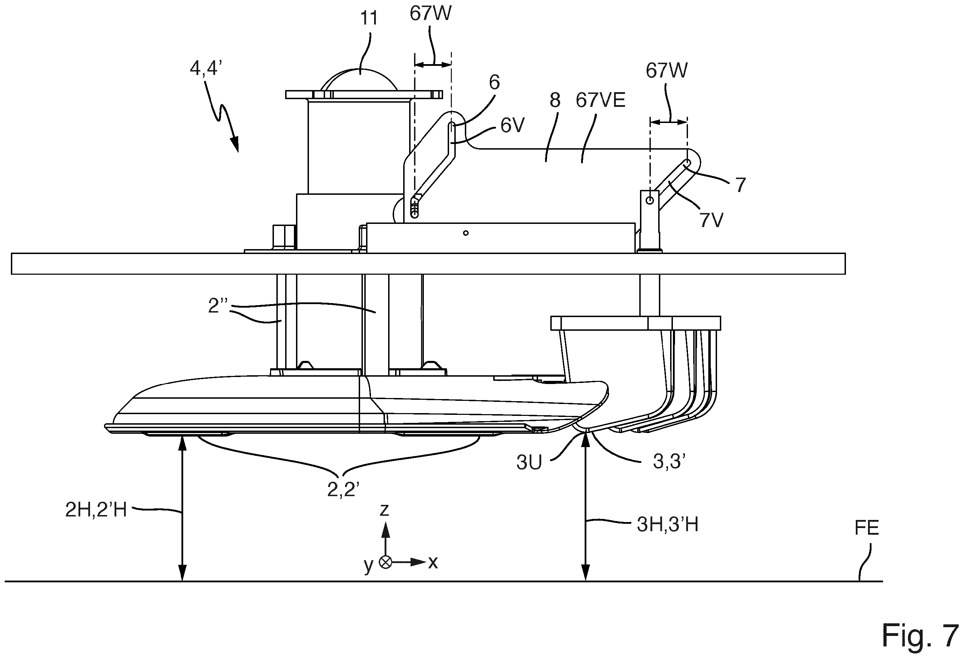

In dem in Fig. 7 bis 10 gezeigten Ausführungsbeispiel weist der Grünflächenbearbeitungsroboter 1 eine Bearbeitungswerkzeugeinrichtung 2" auf. Die Bearbeitungswerkzeugeinrichtung 2" weist das Bearbeitungswerkzeug 2 auf. Die Höhenverstellkopplungsmechanik 4' weist eine Werkzeugführungskulisse 6 und eine Schutzführungskulisse 7 zu der gekoppelten Verstellung der Werkzeughöhe 2H und der Schutzhöhe 3H miteinander auf. Die Werkzeugführungskulisse 6 und die Schutzführungskulisse 7 sind zur gekoppelten, insbesondere parallelen, Verstellung, insbesondere Verschiebung, insbesondere mit einem gleichen Führungskulissenverstellwert 67W, miteinander entlang mindestens einer, insbesondere selben, zu der Verstellung der Werkzeughöhe 2H und der Schutzhöhe 3H nicht-parallelen, insbesondere orthogonalen, Führungsrichtung x in Bezug auf die Bearbeitungswerkzeugeinrichtung 2" und die Schutzeinrichtung 3 ausgebildet, insbesondere sind verstellt, insbesondere verschoben. Die Werkzeugführungskulisse 6 ist zur Führung der und/oder durch die Bearbeitungswerkzeugeinrichtung 2" ausgebildet, insbesondere geführt, und weist einen Werkzeugführungsverlauf 6V mit mindestens einem Abschnitt schräg zu der Verstellung der Werkzeughöhe 2H und der Führungsrichtung x auf. Die Schutzführungskulisse 7 ist zur Führung der und/oder durch die Schutzeinrichtung 3 ausgebildet, insbesondere führt, und weist einen Schutzführungsverlauf 7V mit mindestens einem Abschnitt schräg zu der Verstellung der Schutzhöhe 3H und der Führungsrichtung x auf. Der Werkzeugführungsverlauf 6V und der Schutzführungsverlauf 7V sind verschieden.

In dem gezeigten Ausführungsbeispiel ist der Werkzeugführungsverlauf 6V größer als der Schutzführungsverlauf 7V.

Im Detail sind die Werkzeugführungskulisse 6 und die Schutzführungskulisse 7 fest zueinander angeordnet. In dem gezeigten Ausführungsbeispiel weist die Höhenverstellkopplungsmechanik 4' eine Platte 8 auf. Die Platte 8 weist die Werkzeugführungskulisse 6 und die Schutzführungskulisse 7 auf.

Zusätzlich oder alternativ sind der Werkzeugführungsverlauf 6V und der Schutzführungsverlauf 7V in einer selben Verlaufsebene 67VE.

In dem gezeigten Ausführungsbeispiel ist die Verlaufsebene 67VE eine Plattenebene der Platte 8.

Außerdem ist die Platte 8 an dem Gestell angeordnet, insbesondere und gelagert.

Weiter ist die Bearbeitungswerkzeugeinrichtung 2" an dem Gestell angeordnet, insbesondere und gelagert.

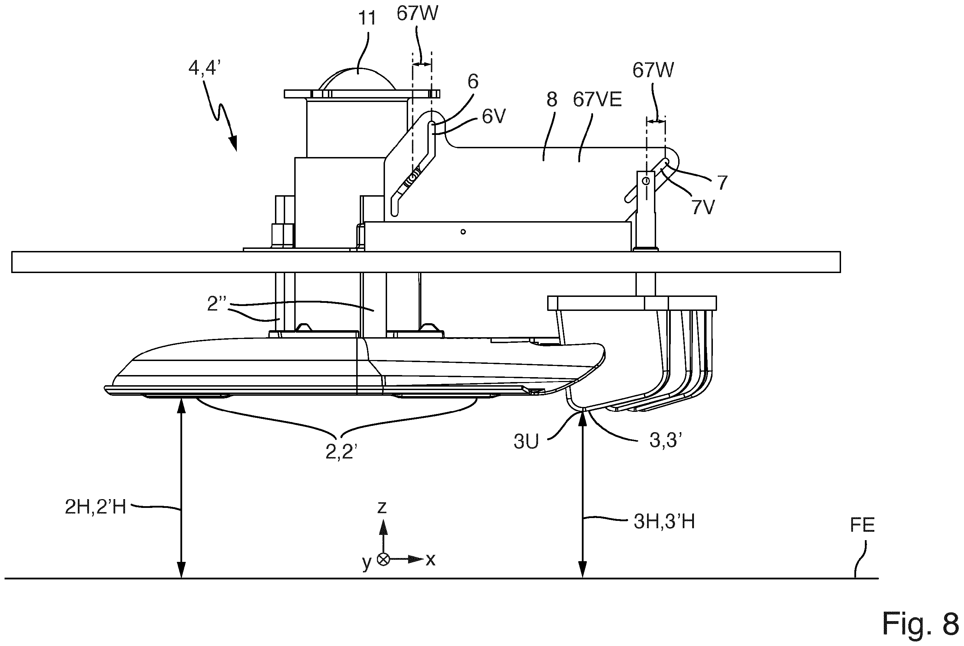

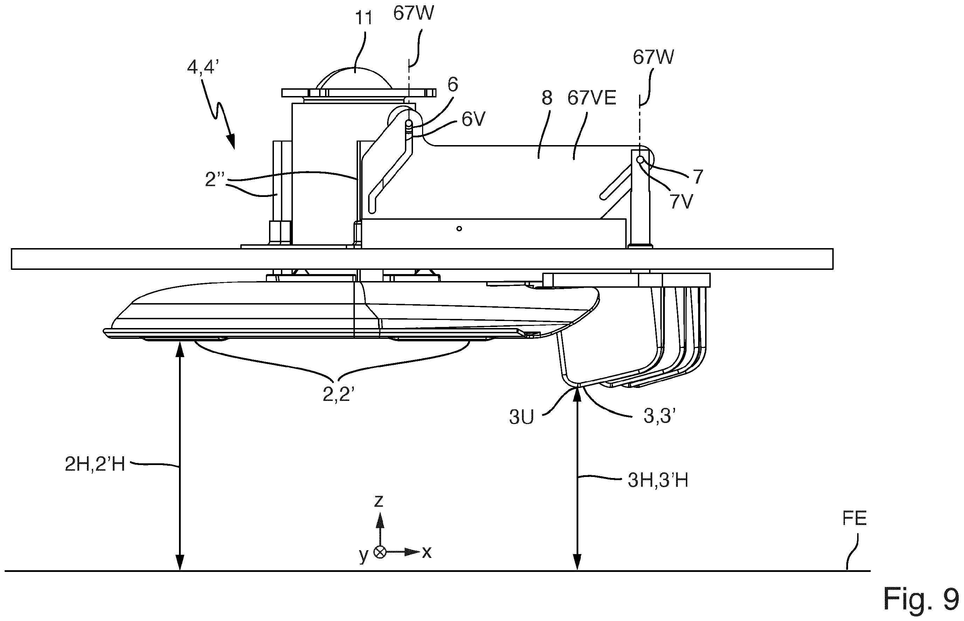

Im Detail verursacht eine Betätigung des Bedienelements 11 die Verstellung der Werkzeughöhe 2H, von in Fig. 7 niedrig, insbesondere 1.5 in gleich 2,5 cm, über in Fig. 8 etwa mittig, insbesondere 2,5 in gleich 6,4 cm, bis in Fig. 9 groß, insbesondere 4 in gleich 10,2 cm. Die Verstellung der Werkzeughöhe 2H verursacht die Verstellung, insbesondere die Verschiebung, der Werkzeugführungskulisse 6, insbesondere der Platte 8, entlang der Führungsrichtung x. Die Verstellung der Werkzeugführungskulisse 6 verursacht die Verstellung, insbesondere die Verschiebung, der Schutzführungskulisse 7 entlang der Führungsrichtung x. Die Verstellung der Schutzführungskulisse 7 verursacht die Verstellung der Schutzhöhe 3H, von in Fig. 7 niedrig, insbesondere 3,3 cm, über in Fig. 8 etwa mittig, insbesondere 4,7 cm, bis in Fig. 9 groß, insbesondere 6,0 cm.

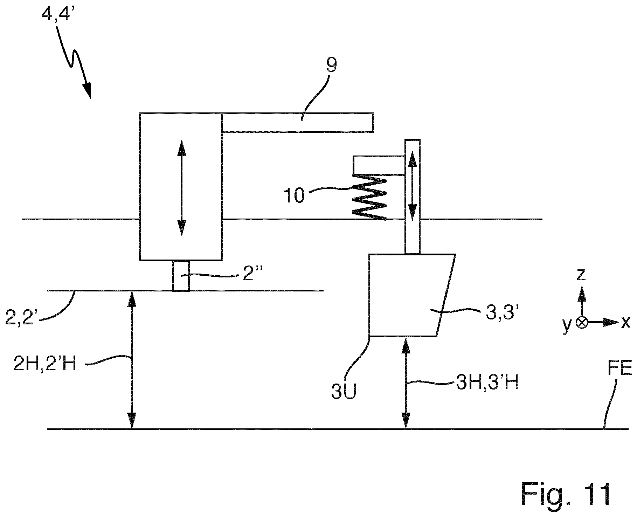

In dem in Fig. 11 gezeigten Ausführungsbeispiel weist die Höhenverstellkopplungsmechanik 4' einen Mitnehmer 9 zu der gekoppelten Verstellung der Werkzeughöhe 2H und der Schutzhöhe 3H miteinander und einen Verstellungsbegrenzer 10 auf.

In dem gezeigten Ausführungsbeispiel ist der Mitnehmer 9 dazu ausgebildet, bei der Verstellung der Werkzeughöhe 2H des Bearbeitungswerkzeugs 2 die Schutzeinrichtung 3 zu der Verstellung der Schutzhöhe 3H mitzunehmen, insbesondere nimmt mit. Der Verstellungsbegrenzer 10 ist dazu ausgebildet, die Verstellung der Schutzhöhe 3H auf einen Abschnitt eines Verstellbereichs der Verstellung der Werkzeughöhe 2H zu begrenzen, insbesondere begrenzt.

In alternativen Ausführungsbeispielen kann der Mitnehmer dazu ausgebildet sein, bei der Verstellung der Schutzhöhe der Schutzeinrichtung das Bearbeitungswerkzeug zu der Verstellung der Werkzeughöhe mitzunehmen, insbesondere nimmt mit. Der Verstellungsbegrenzer kann dazu ausgebildet sein, die Verstellung der Werkzeughöhe auf einen Abschnitt eines Verstellbereichs der Verstellung der Schutzhöhe zu begrenzen, insbesondere begrenzt.

In dem gezeigten Ausführungsbeispiel weist der Grünflächenbearbeitungsroboter 1 eine Bearbeitungswerkzeugeinrichtung 2" auf. Die Bearbeitungswerkzeugeinrichtung 2" weist das Bearbeitungswerkzeug 2 auf.

Zudem ist die Bearbeitungswerkzeugeinrichtung 2" dazu ausgebildet, den Mitnehmer 9 mitzunehmen, insbesondere nimmt mit.

Des Weiteren ist die Bearbeitungswerkzeugeinrichtung 2" an dem Gestell angeordnet, insbesondere und gelagert.

Außerdem ist der Verstellungsbegrenzer 10 an dem Gestell, insbesondere fest, angeordnet.

Im Detail verursacht eine Betätigung des Bedienelements 11 die Verstellung der Werkzeughöhe 2H. Die Verstellung der Werkzeughöhe 2H verursacht eine Verstellung, insbesondere die Mitnahme, des Mitnehmers 9. Die Verstellung des Mitnehmers 9 verursacht die Mitnahme der Schutzeinrichtung 3 und somit die Verstellung der Schutzhöhe 3H. Der Verstellungsbegrenzer 10 begrenzt die Verstellung der Schutzhöhe 3H der Schutzeinrichtung 3 auf den Abschnitt des Verstellbereichs der Verstellung der Werkzeughöhe 2H.

In dem gezeigten Ausführungsbeispiele weist der Verstellungsbegrenzer 10 eine Feder auf, insbesondere ist die Feder. In alternativen Ausführungsbeispielen kann der Verstellungsbegrenzer zusätzlich oder alternativ mindestens teilweise durch das Gestell gebildet sein.

Wie die gezeigten und oben erläuterten Ausführungsbeispiele deutlich machen, stellt die Erfindung einen vorteilhaften autonomen mobilen Grünflächenbearbeitungsroboter bereit, der verbesserte Eigenschaften aufweist.

## Patentansprüche

1. Autonomer mobiler Grünflächenbearbeitungsroboter (1), wobei der Grünflächenbearbeitungsroboter (1) aufweist:
- ein Bearbeitungswerkzeug (2), wobei eine Werkzeughöhe (2H) des Bearbeitungswerkzeugs (2) verstellbar ist,
- eine Schutzeinrichtung (3), wobei die Schutzeinrichtung (3) zum Schutz vor einem Eingriff in das Bearbeitungswerkzeug (2) ausgebildet ist, und wobei eine Schutzhöhe (3H) der Schutzeinrichtung (3) verstellbar ist, und
- eine Höhenverstelleinrichtung (4), **dadurch gekennzeichnet, dass** die Höhenverstelleinrichtung (4) zur gekoppelten Verstellung der Werkzeughöhe (2H) und der Schutzhöhe (3H) miteinander derart ausgebildet ist, dass ein Werkzeughöhenverstellwert (2HW) der Verstellung der Werkzeughöhe (2H) und ein Schutzhöhenverstellwert (3HW) der Verstellung der Schutzhöhe (3H) verschieden sind, und dass ein Abstand (A23) zwischen dem Bearbeitungswerkzeug (2) und der Schutzeinrichtung (3) verändert ist.

2. Grünflächenbearbeitungsroboter (1) nach Anspruch 1,
- wobei der Grünflächenbearbeitungsroboter (1) eine Fahrebene (FE) aufweist, und
- wobei die Werkzeughöhe (2H) und die Schutzhöhe (3H) über der Fahrebene (FE) sind.

3. Grünflächenbearbeitungsroboter (1) nach einem der vorhergehenden Ansprüche,
- wobei die Höhenverstelleinrichtung (4) derart ausgebildet ist, dass der Werkzeughöhenverstellwert (2HW) größer als der Schutzhöhenverstellwert (3HW) ist.

4. Grünflächenbearbeitungsroboter (1) nach einem der vorhergehenden Ansprüche,
- wobei die Schutzeinrichtung (3) vor dem Bearbeitungswerkzeug (2) angeordnet ist.

5. Grünflächenbearbeitungsroboter (1) nach einem der vorhergehenden Ansprüche,
- wobei der Grünflächenbearbeitungsroboter (1) eine Fahrebene (FE) aufweist, und
- wobei das Bearbeitungswerkzeug (2) zur Bewegung, insbesondere zur Rotation, etwa parallel zu der Fahrebene (FE) ausgebildet ist.

6. Grünflächenbearbeitungsroboter (1) nach einem der vorhergehenden Ansprüche,
- wobei das Bearbeitungswerkzeug (2) ein Rasenmähwerkzeug (2') aufweist,
- wobei die Werkzeughöhe (2H) eine Mähhöhe (2'H) des Rasenmähwerkzeugs (2') ist.

7. Grünflächenbearbeitungsroboter (1) nach einem der vorhergehenden Ansprüche,
- wobei die Schutzeinrichtung (3) einen, insbesondere nach unten ausgerichteten und/oder nach unten offenen, Kamm (3') aufweist, und
- wobei die Schutzhöhe (3H) eine Kammhöhe (3'H), insbesondere einer Unterkante (3U), des Kamms (3') ist.

8. Grünflächenbearbeitungsroboter (1) nach einem der vorhergehenden Ansprüche,
- wobei die Höhenverstelleinrichtung (4) eine Höhenverstellkopplungsmechanik (4`) aufweist, wobei die Höhenverstellkopplungsmechanik (4`) zur mechanischen Kopplung des Bearbeitungswerkzeugs (2) und der Schutzeinrichtung (3) zu der gekoppelten Verstellung der Werkzeughöhe (2H) und der Schutzhöhe (3H) miteinander ausgebildet ist.

9. Grünflächenbearbeitungsroboter (1) nach Anspruch 8,
- wobei die Höhenverstellkopplungsmechanik (4`) einen, insbesondere einseitigen, Hebel (5) zu der gekoppelten Verstellung der Werkzeughöhe (2H) und der Schutzhöhe (3H) miteinander aufweist,
- wobei der Grünflächenbearbeitungsroboter (1) eine Bearbeitungswerkzeugeinrichtung (2") aufweist, wobei die Bearbeitungswerkzeugeinrichtung (2") das Bearbeitungswerkzeug (2) aufweist, und wobei die Bearbeitungswerkzeugeinrichtung (2") mit dem Hebel (5) mit einem Werkzeugabstandswert (A25W) von einer Drehachse (A5) des Hebels (5) mechanisch gekoppelt ist,
- wobei die Schutzeinrichtung (3) mit dem Hebel (5) mit einem Schutzabstandswert (A35W) von der Drehachse (A5) mechanisch gekoppelt ist, und
- wobei der Werkzeugabstandswert (A25W) und der Schutzabstandswert (A35W) verschieden sind.

10. Grünflächenbearbeitungsroboter (1) nach Anspruch 8 oder 9,
- wobei der Grünflächenbearbeitungsroboter (1) eine Bearbeitungswerkzeugeinrichtung (2") aufweist, wobei die Bearbeitungswerkzeugeinrichtung (2") das Bearbeitungswerkzeug (2) aufweist,
- wobei die Höhenverstellkopplungsmechanik (4`) eine Werkzeugführungskulisse (6) und eine Schutzführungskulisse (7) zu der gekoppelten Verstellung der Werkzeughöhe (2H) und der Schutzhöhe (3H) miteinander aufweist, wobei die Werkzeugführungskulisse (6) und die Schutzführungskulisse (7) zur gekoppelten, insbesondere parallelen, Verstellung, insbesondere Verschiebung, insbesondere mit einem gleichen Führungskulissenverstellwert (67W), miteinander entlang mindestens einer, insbesondere selben, zu der Verstellung der Werkzeughöhe (2H) und der Schutzhöhe (3H) nicht-parallelen, insbesondere orthogonalen, Führungsrichtung (x) in Bezug auf die Bearbeitungswerkzeugeinrichtung (2") und die Schutzeinrichtung (3) ausgebildet sind,
- wobei die Werkzeugführungskulisse (6) zur Führung der und/oder durch die Bearbeitungswerkzeugeinrichtung (2") ausgebildet ist und einen Werkzeugführungsverlauf (6V) mit mindestens einem Abschnitt schräg zu der Verstellung der Werkzeughöhe (2H) und der Führungsrichtung (x) aufweist,
- wobei die Schutzführungskulisse (7) zur Führung der und/oder durch die Schutzeinrichtung (3) ausgebildet ist und einen Schutzführungsverlauf (7V) mit mindestens einem Abschnitt schräg zu der Verstellung der Schutzhöhe (3H) und der Führungsrichtung (x) aufweist, und
- wobei der Werkzeugführungsverlauf (6V) und der Schutzführungsverlauf (7V) verschieden sind.

11. Grünflächenbearbeitungsroboter (1) nach Anspruch 10,
- wobei die Werkzeugführungskulisse (6) und die Schutzführungskulisse (7) fest zueinander angeordnet sind, insbesondere wobei die Höhenverstellkopplungsmechanik (4`) eine Platte (8) aufweist, wobei die Platte (8) die Werkzeugführungskulisse (6) und die Schutzführungskulisse (7) aufweist, und/oder
- wobei der Werkzeugführungsverlauf (6V) und der Schutzführungsverlauf (7V) in einer selben Verlaufsebene (67VE) sind.

12. Grünflächenbearbeitungsroboter (1) nach einem der Ansprüche 8 bis 11,
- wobei die Höhenverstellkopplungsmechanik (4') einen Mitnehmer (9) zu der gekoppelten Verstellung der Werkzeughöhe (2H) und der Schutzhöhe (3H) miteinander und einen Verstellungsbegrenzer (10), insbesondere einen Mitnehmungsbegrenzer, aufweist,
- wobei der Mitnehmer (9) dazu ausgebildet ist, bei der Verstellung der Werkzeughöhe (2H) des Bearbeitungswerkzeugs (2) die Schutzeinrichtung (3) zu der Verstellung der Schutzhöhe (3H) mitzunehmen, und wobei der Verstellungsbegrenzer (10) dazu ausgebildet ist, die Verstellung der Schutzhöhe (3H), insbesondere die Mitnahme, auf einen Abschnitt eines Verstellbereichs der Verstellung der Werkzeughöhe (2H) zu begrenzen, oder
- wobei der Mitnehmer dazu ausgebildet ist, bei der Verstellung der Schutzhöhe der Schutzeinrichtung das Bearbeitungswerkzeug zu der Verstellung der Werkzeughöhe mitzunehmen, und wobei der Verstellungsbegrenzer dazu ausgebildet ist, die Verstellung der Werkzeughöhe, insbesondere die Mitnahme, auf einen Abschnitt eines Verstellbereichs der Verstellung der Schutzhöhe zu begrenzen.

13. Grünflächenbearbeitungsroboter (1) nach einem der vorhergehenden Ansprüche,
- wobei der Grünflächenbearbeitungsroboter (1) eine Fahrebene (FE) aufweist, und
- wobei das Bearbeitungswerkzeug (2) und die Schutzeinrichtung (3) etwa parallel zu der Fahrebene (FE) zueinander fest gelagert sind.

14. Grünflächenbearbeitungsroboter (1) nach einem der vorhergehenden Ansprüche,
- wobei die Höhenverstelleinrichtung (4) ein nutzerbetätigbares Bedienelement (11) zu der gekoppelten Verstellung der Werkzeughöhe (2H) und der Schutzhöhe (3H) miteinander aufweist, und/oder
- wobei die Höhenverstelleinrichtung mindestens einen Motor zu der gekoppelten Verstellung der Werkzeughöhe und der Schutzhöhe miteinander aufweist.

## Claims

1. Autonomous mobile green-area treatment robot (1), wherein the green-area treatment robot (1) comprises:
- a treatment tool (2), wherein a tool height (2H) of the treatment tool (2) is adjustable,
- a protection device (3), wherein the protection device (3) is configured to protect against access into the treatment tool (2), and wherein a protection height (3H) of the protection device (3) is adjustable, and
- a height-adjustment device (4), **characterised in that** the height-adjustment device (4) is configured for the coupled adjustment of the tool height (2H) and the protection height (3H) together, such that a tool height adjustment value (2HW) of the adjustment of the tool height (2H) and a protection height adjustment value (3HW) of the adjustment of the protection height (3H) are different, and that a distance (A23) between the treatment tool (2) and the protection device (3) is changed.

2. Green-area treatment robot (1) according to claim 1,
- wherein the green-area treatment robot (1) has a travel plane (FE), and
- wherein the tool height (2H) and the protection height (3H) are above the travel plane (FE).

3. Green-area treatment robot (1) according to any of the preceding claims,
- wherein the height-adjustment device (4) is configured such that the tool height adjustment value (2HW) is greater than the protection height adjustment value (3HW) .

4. Green-area treatment robot (1) according to any of the preceding claims,
- wherein the protection device (3) is arranged in front of the treatment tool (2).

5. Green-area treatment robot (1) according to any of the preceding claims,
- wherein the green-area treatment robot (1) has a travel plane (FE), and
- wherein the treatment tool (2) is configured for movement, in particular rotation, approximately parallel to the travel plane (FE).

6. Green-area treatment robot (1) according to any of the preceding claims,
- wherein the treatment tool (2) comprises a lawn mowing tool (2'),
- wherein the tool height (2H) is a mowing height (2'H) of the lawn mowing tool (2').

7. Green-area treatment robot (1) according to any of the preceding claims,
- wherein the protection device (3) has a comb (3') which in particular is oriented downward and/or open at the bottom, and
- wherein the protection height (3H) is a comb height (3'H), in particular of a lower edge (3U) of the comb (3').

8. Green-area treatment robot (1) according to any of the preceding claims,
- wherein the height-adjustment device (4) comprises a height adjustment coupling mechanism (4'), wherein the height adjustment coupling mechanism (4') is configured for mechanical coupling of the treatment tool (2) and the protection device (3) for the coupled adjustment of the tool height (2H) and the protection height (3H) together.

9. Green-area treatment robot (1) according to claim 8,
- wherein the height adjustment coupling mechanism (4') has an in particular one-sided lever (5) for the coupled adjustment of the tool height (2H) and the protection height (3H) together,
- wherein the green-area treatment robot (1) has a treatment tool device (2"), wherein the treatment tool device (2") comprises the treatment tool (2), and wherein the treatment tool device (2") is mechanically coupled to the lever (5) with a tool spacing value (A25W) from a rotary axis (A5) of the lever (5),
- wherein the protection device (3) is mechanically coupled to the lever (5) with a protection spacing value (A35W) from the rotary axis (A5), and
- wherein the tool spacing value (A25W) and the protection spacing value (A35W) are different.

10. Green-area treatment robot (1) according to claim 8 or 9,
- wherein the green-area treatment robot (1) has a treatment tool device (2"), wherein the treatment tool device (2") comprises the treatment tool (2),
- wherein the height adjustment coupling mechanism (4') has a tool guide slot (6) and a protection guide slot (7) for the coupled adjustment of the tool height (2H) and the protection height (3H) together, wherein the tool guide slot (6) and the protection guide slot (7) serve for the coupled, in particular parallel adjustment, in particular displacement, in particular with a same guide slot adjustment value (67W), together along at least one, in particular the same guide direction (x), which is not parallel to the adjustment of the tool height (2H) and the protection height (3H), in particular is orthogonal thereto, in relation to the treatment tool device (2") and the protection device (3),
- wherein the tool guide slot (6) is configured for guiding and/or is formed by the treatment tool device (2"), and has a tool guide course (6V) with at least one portion oblique to the adjustment of the tool height (2H) and the guide direction (x),
- wherein the protection guide slot (7) is configured for guiding and/or is formed by the protection device (3) and has a protection guide course (7V) with at least one portion oblique to the adjustment of the protection height (3H) and the guide direction (x), and
- wherein the tool guide course (6V) and the protection guide course (7V) are different.

11. Green-area treatment robot (1) according to claim 10,
- wherein the tool guide slot (6) and the protection guide slot (7) are fixed relative to one another, in particular wherein the height adjustment coupling mechanism (4') has a plate (8), wherein the plate (8) comprises the tool guide slot (6) and the protection guide slot (7), and/or
- wherein the tool guide course (6V) and the protection guide course (7V) run in a same course plane (67VE).

12. Green-area treatment robot (1) according to any of claims 8 to 11,
- wherein the height adjustment coupling mechanism (4') has a carrier (9) for the coupled adjustment of the tool height (2H) and the protection height (3H) together, and an adjustment limiter (10), in particular a carrying limiter,
- wherein the carrier (9) is configured, on adjustment of the tool height (2H) of the treatment tool (2), to carry the protection device (3) for the adjustment of the protection height (3H), and wherein the adjustment limiter (10) is configured to limit the adjustment of the protection height (3H), in particular the carrying, to a portion of an adjustment range of the adjustment of the tool height (2H), or
- wherein the carrier is configured, on adjustment of the protection height of the protection device, to carry the treatment tool for the adjustment of the tool height, and wherein the adjustment limiter is configured to limit the adjustment of the tool height, in particular the carrying, to a portion of an adjustment range of the adjustment of the protection height.

13. Green-area treatment robot (1) according to any of the preceding claims,
- wherein the green-area treatment robot (1) has a travel plane (FE), and
- wherein the treatment tool (2) and the protection device (3) are mounted fixedly relative to one another, approximately parallel to the travel plane (FE).

14. Green-area treatment robot (1) according to any of the preceding claims,
- wherein the height-adjustment device (4) has a user-actuatable control element (11) for the coupled adjustment of the tool height (2H) and the protection height (3H) together, and/or
- wherein the height-adjustment device has at least one motor for the coupled adjustment of the tool height and the protection height together.

## Revendications

1. Robot de traitement d'espaces verts mobile autonome (1), le robot de traitement d'espaces verts (1) présentant :
- un outil de traitement (2), une hauteur d'outil (2H) de l'outil de traitement (2) étant réglable,
- un dispositif de protection (3), le dispositif de protection (3) étant configuré pour protéger contre une intervention dans l'outil de traitement (2), et une hauteur de protection (3H) du dispositif de protection (3) étant réglable, et
- un dispositif de réglage de hauteur (4), **caractérisé en ce que** le dispositif de réglage de hauteur (4) est configuré pour le réglage couplé de la hauteur d'outil (2H) et de la hauteur de protection (3H) l'une avec l'autre de telle sorte qu'une valeur de réglage de hauteur d'outil (2HW) du réglage de la hauteur d'outil (2H) et une valeur de réglage de hauteur de protection (3HW) du réglage de la hauteur de protection (3H) sont différentes, et qu'une distance (A23) entre l'outil de traitement (2) et le dispositif de protection (3) est modifiée.

2. Robot de traitement d'espaces verts (1) selon la revendication 1,
- le robot de traitement d'espaces verts (1) présentant un plan de déplacement (FE), et
- la hauteur d'outil (2H) et la hauteur de protection (3H) étant au-dessus du plan de déplacement (FE).

3. Robot de traitement d'espaces verts (1) selon l'une quelconque des revendications précédentes,
- le dispositif de réglage de hauteur (4) étant configuré de telle sorte que la valeur de réglage de hauteur d'outil (2HW) est supérieure à la valeur de réglage de hauteur de protection (3HW).

4. Robot de traitement d'espaces verts (1) selon l'une quelconque des revendications précédentes,
- le dispositif de protection (3) étant agencé devant l'outil de traitement (2).

5. Robot de traitement d'espaces verts (1) selon l'une quelconque des revendications précédentes,
- le robot de traitement d'espaces verts (1) présentant un plan de déplacement (FE), et
- l'outil de traitement (2) étant configuré pour le déplacement, notamment pour la rotation, approximativement parallèlement au plan de déplacement (FE) .

6. Robot de traitement d'espaces verts (1) selon l'une quelconque des revendications précédentes,
- l'outil de traitement (2) présentant un outil de coupe de gazon (2'),
- la hauteur d'outil (2H) étant une hauteur de coupe (2'H) de l'outil de coupe de gazon (2').

7. Robot de traitement d'espaces verts (1) selon l'une quelconque des revendications précédentes,
- le dispositif de protection (3) présentant un peigne (3'), notamment orienté vers le bas et/ou ouvert vers le bas, et
- la hauteur de protection (3H) étant une hauteur de peigne (3'H), notamment un bord inférieur (3U), du peigne (3').

8. Robot de traitement d'espaces verts (1) selon l'une quelconque des revendications précédentes,
- le dispositif de réglage de hauteur (4) présentant un mécanisme de couplage de réglage de hauteur (4'), le mécanisme de couplage de réglage de hauteur (4') étant configuré pour le couplage mécanique de l'outil de traitement (2) et du dispositif de protection (3) pour le réglage couplé de la hauteur d'outil (2H) et de la hauteur de protection (3H) l'une avec l'autre.

9. Robot de traitement d'espaces verts (1) selon la revendication 8,
- le mécanisme de couplage de réglage de hauteur (4') présentant un levier (5), notamment unilatéral, pour le réglage couplé de la hauteur d'outil (2H) et de la hauteur de protection (3H) l'une avec l'autre,
le robot de traitement d'espaces verts (1) présentant un dispositif d'outil de traitement (2''), le dispositif d'outil de traitement (2'') présentant l'outil de traitement (2), et le dispositif d'outil de traitement (2'') étant couplé mécaniquement au levier (5) avec une valeur de distance d'outil (A25W) par rapport à un axe de rotation (A5) du levier (5),
- le dispositif de protection (3) étant couplé mécaniquement au levier (5) avec une valeur de distance de protection (A35W) par rapport à l'axe de rotation (A5), et
- la valeur de distance d'outil (A25W) et la valeur de distance de protection (A35W) étant différentes.

10. Robot de traitement d'espaces verts (1) selon la revendication 8 ou 9,
- le robot de traitement d'espaces verts (1) présentant un dispositif d'outil de traitement (2''), le dispositif d'outil de traitement (2'') présentant l'outil de traitement (2),
- le mécanisme de couplage de réglage de hauteur (4') présentant une coulisse de guidage d'outil (6) et une coulisse de guidage de protection (7) pour le réglage couplé de la hauteur d'outil (2H) et de la hauteur de protection (3H) l'une avec l'autre, la coulisse de guidage d'outil (6) et la coulisse de guidage de protection (7) étant configurées pour le réglage couplé, notamment parallèle, notamment le décalage, notamment avec une même valeur de réglage de coulisse de guidage (67W), l'une avec l'autre le long d'au moins une, notamment une même, direction de guidage (x) non parallèle au réglage de la hauteur d'outil (2H) et de la hauteur de protection (3H), notamment orthogonale, par rapport au dispositif d'outil de traitement (2") et au dispositif de protection (3),
- la coulisse de guidage d'outil (6) étant configurée pour le guidage du dispositif d'outil de traitement (2") et/ou à travers celui-ci et présentant un tracé de guidage d'outil (6V) avec au moins une section en oblique par rapport au réglage de la hauteur d'outil (2H) et à la direction de guidage (x),
- la coulisse de guidage de protection (7) étant configurée pour le guidage du dispositif de protection (3) et/ou à travers celui-ci et présentant un tracé de guidage de protection (7V) avec au moins une section en oblique par rapport au réglage de la hauteur de protection (3H) et à la direction de guidage (x), et
- le tracé de guidage d'outil (6V) et le tracé de guidage de protection (7V) étant différents.

11. Robot de traitement d'espaces verts (1) selon la revendication 10,
- la coulisse de guidage d'outil (6) et la coulisse de guidage de protection (7) étant agencées de manière fixe l'une par rapport à l'autre, le mécanisme de couplage de réglage de hauteur (4') présentant notamment une plaque (8), la plaque (8) présentant la coulisse de guidage d'outil (6) et la coulisse de guidage de protection (7), et/ou
- le tracé de guidage d'outil (6V) et le tracé de guidage de protection (7V) étant dans un même plan de tracé (67VE).

12. Robot de traitement d'espaces verts (1) selon l'une quelconque des revendications 8 à 11,
- le mécanisme de couplage de réglage de hauteur (4') présentant un entraîneur (9) pour le réglage couplé de la hauteur d'outil (2H) et de la hauteur de protection (3H) l'une avec l'autre et un limiteur de réglage (10), notamment un limiteur d'entraînement,
- l'entraîneur (9) étant configuré pour, lors du réglage de la hauteur d'outil (2H) de l'outil de traitement (2), entraîner le dispositif de protection (3) pour le réglage de hauteur de protection (3H), et le limiteur de réglage (10) étant configuré pour limiter le réglage de la hauteur de protection (3H), notamment l'entraînement, à une section d'une zone de réglage du réglage de la hauteur d'outil (2H), ou
- l'entraîneur étant configuré pour, lors du réglage de la hauteur de protection du dispositif de protection, entraîner l'outil de traitement pour le réglage de la hauteur d'outil, et le limiteur de réglage étant configuré pour limiter le réglage de la hauteur d'outil, notamment l'entraînement, à une section d'une zone de réglage du réglage de la hauteur de protection.

13. Robot de traitement d'espaces verts (1) selon l'une quelconque des revendications précédentes,
- le robot de traitement d'espaces verts (1) présentant un plan de déplacement (FE) et
- l'outil de traitement (2) et le dispositif de protection (3) étant montés de manière fixe l'un par rapport à l'autre approximativement parallèlement au plan de déplacement (FE).

14. Robot de traitement d'espaces verts (1) selon l'une quelconque des revendications précédentes,
- le dispositif de réglage de hauteur (4) présentant un élément de commande (11) actionnable par l'utilisateur pour le réglage couplé de la hauteur d'outil (2H) et de la hauteur de protection (3H) l'une avec l'autre, et/ou
- le dispositif de réglage de hauteur présentant au moins un moteur pour le réglage couplé de la hauteur d'outil et de la hauteur de protection l'une avec l'autre.
